# EUROPÄISCHE PATENTSCHRIFT

(11) **EP 3 862 732 B1**
(45) Veröffentlichungstag und Bekanntmachung des Hinweises auf die Patenterteilung: **31.01.2024**
(21) Anmeldenummer: 21155640.2
(22) Anmeldetag: 05.02.2021
(51) Int. Cl.: G01G 23/18, G01G 19/44

(54) **WAAGE**
SCALE
BALANCE

(30) Priorität: 05.02.2020 DE 202020100623 U
(43) Veröffentlichungstag der Anmeldung: 11.08.2021
(73) Patentinhaber: Leifheit AG, 56377 Nassau (DE)
(72) Erfinder: Windrich, Michael, 65183 Wiesbaden (DE); Bosscher, Eric, 56379 Obernhof (DE); Emter, Artjom, 56077 Koblenz (DE); Rolinger, Thomas, 56329 St. Goar (DE); Garg, Gaurav, 56068 Koblenz (DE)
(74) Vertreter: btb IP Bungartz Baltzer Partnerschaft mbB Patentanwälte

(56) Entgegenhaltungen:
- US-A- 4 841 280
- US-A1- 2002 144 845
- US-A1- 2009 173 549
- US-A1- 2013 233 627

## Beschreibung

Die Erfindung betrifft eine Waage nach dem Oberbegriff des Anspruchs 1. Die gattungsgemäßen Waagen weisen eine insbesondere als Tragplatte ausgebildete Aufnahme für eine zu wiegende Last, eine Auswerteelektronik zur Bestimmung des Gewichts der Last, eine Anzeigevorrichtung zur Anzeige des Gewichts der Last sowie zumindest ein Bedienelement zur Bedienung der Waage auf. Die Erfindung betrifft dabei insbesondere akku- oder batteriebetriebene Waagen, die als Personen-, Küchen-, Brief- oder Gepäckwaagen ausgebildet sind.

Die Tragplatte der gattungsgemäßen Waagen stützt sich über Wägezellen mittelbar oder unmittelbar auf einem Untergrund ab. Mittelbar kann bedeuten, dass die Waage unterhalb der Tragplatte ein mit der Tragplatte fest verbundenes Gehäuse aufweisen kann, das sich dann seinerseits über die Wägezellen auf dem Untergrund abstützt. Natürlich können sich auch die Wägezellen wiederum mittelbar auf dem Untergrund abstützen, für die Vorteile und Anwendung der vorliegenden Erfindung ist dies nicht wesentlich.

Die Anzeigevorrichtung ist üblicherweise unterhalb der Oberseite der Tragplatte, also innerhalb der Tragplatte oder unter der Tragplatte, derart angeordnet, dass das Wiegeergebnis durch diese Oberseite der Tragplatte von oben sichtbar ist.

Waagen dieser Art weisen häufig ein LCD-Display oder LED-Display als Anzeigevorrichtung für die Anzeige eines Messwertes auf. Bei den Wagen werden zur Anzeige der Einheiten, wie zum Beispiel kg, Ib, g, %, usw., Extrasegmente oder Bereiche des gesamten Displays verwendet. Somit umfassen diese Anzeigevorrichtungen zumindest einen ersten und zweiten Anzeigebereich.

Die Unterteilung der Anzeigevorrichtung in den ersten und zweiten Anzeigebereich hat den Nachteil, dass ein Platz auf dem Display reserviert werden muss, oder dass zusätzliche individuelle LEDs notwendig sind, um die Einheiten neben den Zahlenwerten bzw. Messwerten darstellen zu können. Dadurch ist die Fläche des angezeigten Zahlenwertes kleiner oder das Display muss entsprechend in der Höhe bzw. Breite vergrößert sein. Im Falle eines LED-Displays wird dafür auch zusätzlicher Strom benötigt, wodurch die Lebensdauer der Batterie verkürzt bzw. die Nutzungsdauer des Akkus verkürzt wird. Dies wiederum verändert das Design der Waage und/oder erhöht die Kosten durch ein größeres Display, um den gleichen Inhalt anzuzeigen.

Insbesondere in Verbindung mit Waagen, die keine offen sichtbare Anzeigevorrichtung aufweisen sollen, ist die Unterteilung der Anzeigevorrichtung von besonderem Nachteil. Ein Beispiel hierfür ist eine Waage, deren Tragplatte einen Trägerkörper zur Aufnahme einer zu wiegenden Last aufweist, der eine Deckschicht besitzt, die die Oberseite des Trägerkörpers teilweise oder insbesondere auch vollflächig bedeckt, wobei die Anzeigevorrichtung unter der Deckschicht mit einer Mehrzahl von einzelnen Leuchtdioden (LEDs) zur Anzeige des Anzeigewertes vorgesehen ist. Hier scheinen die LEDs durch die Deckschicht, so dass der Eindruck einer ungestörten, zum Beispiel hölzernen Oberfläche durch die Deckschicht erzeugt wird. Die LEDs werden von der Elektronik zur Anzeige des Anzeigeinhaltes als Matrixanzeige selektiv angesteuert und sind so illuminierbar, wobei diese Matrixanzeige den Anzeigeinhalt über die von den LEDs erzeugten Lichtpunkteanzeigt. Hier ist ein zweigeteilter und damit vergleichsweise großer Bereich der Anzeigevorrichtung eher störend, zumal die Einheitenanzeige bei einer solchen Ausgestaltung wegen der notwendigen Auflösung auch nicht unbegrenzt klein gehalten werden kann.

Aus der DE 20 2009 012 748 U1 ist eine Waage mit einem das zu wiegende Gewicht aufnehmenden, lichtdurchlässigen Gehäuse bekannt, in dem eine großflächige LED-Anzeige zur Anzeige des Wiegeergebnisses durch den oberen Gehäuseteil hindurch vorgesehen ist. Die Waage kann einen transluzenten Überzug oder eine Abdeckung in Form eines Bodenbelag- oder Textilelement aufweisen. Diese Waage weist zwar ein großes, durch die Tragplatte sichtbares Display auf, ist aber hinsichtlich der Gestaltung des Gehäuses und der Tragplatte eingeschränkt.

Eine weitere Waage der oben genannten Art ist aus der DE 10 2005 039 953 A1 bekannt. Diese Waage weist ein Display als Anzeigevorrichtung für die Anzeige eines Messwertes auf, das eine dunkel eingefärbte Scheibe besitzt, hinter der aktivierbare Leuchtelemente angeordnet sind, die im Falle der Aktivierung so stark leuchten, dass von den Leuchtelementen ausgehendes Licht durch die Scheibe hindurch mit bloßem Auge wahrnehmbar ist. Die Scheibe ist dabei auch gleichzeitig die Tragplatte, auf die das zu wiegende Objekt auflegbar oder aufstellbar ist.

Derartige Tragplatten werden, damit die Anzeigevorrichtung im inaktiven Zustand weitgehend unsichtbar bleibt, bedruckt, wobei die Pixel im Druckvorgang so gesetzt werden, dass sich einerseits der Eindruck einer vollflächigen Bedruckung ergibt, andererseits aber der Abstand der einzelnen Pixel ausreichend groß ist, um bei aktivierter Anzeigevorrichtung den angezeigten Wert durch die Beschichtung hindurch infolge der beim Bedrucken freigebliebenen Bereiche erkennen zu können.

Diese bekannten Waagen haben dabei den Nachteil, dass die Tragplatte auch gleichzeitig die Anzeigevorrichtung ist, so dass im Wesentlichen nur eine gläserne Tragplatte in Betracht kommt. Ferner kann der gewünschte Effekt nur durch das Bedrucken erzielt werden, was die Gestaltungsfreiheit einschränkt. Die gleichen Nachteile würde auch eine Waage aufweisen, die eine separate Tragplatte verwendet, unter der die Anzeigevorrichtung angeordnet ist. Auch hier müsste eine Teilbedruckung Bereiche freilassen, durch die das Licht der Anzeigevorrichtung hindurchtreten kann.

Aus der DE 10 2006 026 281 B3 wiederum ist eine Waage mit einer transluzenten Tragplatte bekannt, die eine innerhalb oder außerhalb der Tragplatte verdeckt angeordnete Lichtquelle aufweist, die das Licht in die Plattenebene einkoppelt. Die Lichtstrahlen treten dann an den Begrenzungen der Tragplatte als optischer Hinweis auf die Tragplattengrenzen auf. Dies lässt sich im Wesentlichen nur mit Glasplatten als Tragplatte realisieren und stellt zwar eine vorteilhafte Lösung dar, allerdings besteht bezüglich der Gestaltungsfreiheit der Waage weiterer Bedarf, die Tragplatte in eine andere Richtung optisch attraktiv auszugestalten. Ferner kann durch diese Lösung die Anzeigevorrichtung nicht verdeckt ausgebildet werden.

Aus der US 2013/0233627 A1 und der US 2009/0173549 A1 sind weiterhin Waagen bekannt, die ein größeres Display als Anzeigevorrichtung aufweisen, über das dem Benutzer eine Mehrzahl von Informationen auf einmal oder hintereinander angezeigt werden kann. Eine Waage mit einem Überzug für die Tragplatte, der die Anzeigevorrichtung abdeckt und im inaktiven Zustand nicht sichtbar macht, ist aus der US 2002/0144845 A1 bekannt.

Aufgabe der Erfindung ist es, zumindest einen der zuvor genannten Nachteile zu überwinden. Insbesondere ist es Aufgabe der Erfindung, eine Waage zu schaffen, die kostengünstig herzustellen sowie optisch ansprechend und einfach zu bedienen ist.

Die Lösung der Aufgabe erfolgt erfindungsgemäß durch eine Waage mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Die Waage mit der Anzeigevorrichtung sind so ausgebildet und eingerichtet, dass eine zusammenhängende Zeichenfolge durch einen Wechsel der Anzeigedarstellung in der Anzeigevorrichtung durch LEDs abgebildet werden kann. Als zusammenhängende Zeichenfolge ist vorliegend insbesondere eine Kombination aus Zahlen und Buchstaben zu verstehen, die für eine vollständige bzw. eindeutige Darstellung des Wiegeergebnisses notwendig ist. Die zusammenhängende Zeichenfolge ist vorzugsweise aus einer Zahl und einer der Zahl zuzuordnenden Einheit gebildet. Entsprechend kann die zusammenhängende Zeichenfolge insbesondere die Messgröße mit zugehöriger Einheit, wie "kg", "Ib", "g", "%" sein. Es kann auch vorgesehen sein, dass die Einheit vor der Zahl steht und diese Kombination die zusammenhängende Zeichenkette bildet.

Allgemein ermöglicht die Erfindung, dass Segmente der Anzeigevorrichtung doppelt genutzt werden können und somit die Größe des Displays und damit die Kosten reduziert werden.

Die aus dem Stand der Technik bekannten Anzeigevorrichtungen weisen mehrere Anzeigebereiche auf, auf denen unterschiedliche Zeichen darstellbar sind, z.B. in einem Bereich nur Zahlen und in dem anderen Bereich Buchstaben und Sonderzeichen. In vorteilhafterweise weist die Anzeigevorrichtung nur einen Anzeigebereich auf, der eingerichtet, ist, Segmente sowohl für Zahlen, Buchstaben und/oder Sonderzeichen, also mehrfach nutzen zu können.

Die Elektronik der Waage steuert die Anzeigevorrichtung so an, dass zunächst das Wiegeergebnis als Zahlenwert dargestellt ist und anschließend die zugehörige Einheit oder umgekehrt. Das Wiegeergebnis und die zugehörige Einheit werden nicht gleichzeitig in der Anzeigevorrichtung dargestellt.

Insbesondere vor dem Hintergrund, dass die gattungsgemäßen Waagen, im Haushaltsbereich eingesetzt werden und eher wenig Informationen übermitteln müssen, reicht es oft aus, wenn die Anzeigevorrichtung nur einzelne Bildpunkte (Pixel) oder individuelle LEDs anzuzeigen vermag, aus denen sich Zahlen und/oder Buchstaben zusammensetzen lassen. Hierfür kann die Anzeigevorrichtung eine Mehrzahl von Leuchtquellen umfassen, die von einer Elektronik zur Anzeige des Wiegeergebnisses selektiv ansteuerbar ausgebildet sind und so das Wiegeergebnis anzeigen können. Die Leuchtquellen sind durch einzelne oder in Gruppen ansteuerbare LEDs gebildet.

Die wiederzugebene Information wird somit in einzelne, zu erhellende Punkte aufgeteilt, die mit entsprechender Helligkeit auch hinter der Deckschicht dargestellt werden können. Dafür ist die Anzeigevorrichtung unter der Tragplatte der Waage angeordnet, wobei die Tragplatte wenigstens in dem Bereich, unter dem die Anzeigevorrichtung angeordnet ist, die geschlossene Deckschicht aufweist. Die Leuchtquellen der Anzeigevorrichtung haben eine Leuchtstärke und die Deckschicht eine Transluzenz, die derart aufeinander abgestimmt sind, dass die Anzeigevorrichtung durch die Deckschicht sichtbar ist und das Wiegeergebnis erkennbar ist.

Die einzelnen Leuchtquellen sind aufgrund der Abstimmung der Dicke der Deckschicht auf die Leuchtstärke der Leuchtelemente der Anzeigevorrichtung auch dann sichtbar, wenn die Deckschicht eine durchgängige Schicht ist, so dass eine bei Waagen aus dem Stand der Technik notwenige Teilbedruckung mit einzelnen Pixeln, die mit entsprechendem Abstand zueinander gedruckt sind, nicht notwendig ist. Insbesondere können auf diese Weise auch Tragplatten aus Holz verwendet werden.

Die einzelnen Leuchtquellen sind so angeordnet, dass Segmente der Anzeigevorrichtung in einem Anzeigebereich mehrfach für die Anzeige von Zahlen, Buchstaben und Sonderzeichen genutzt werden können.

Dabei kann die Anzeigevorrichtung ferner eingerichtet sein, einen ersten Teil der Zeichenfolge in einer anderen Farbe darstellen zu können als einen zweiten Teil der Zeichenfolge, insbesondere dass die Zahlenangabe in einer ersten Farbe und eine der Zahlenangabe zugeordneten Einheit in einer anderen Farbe darstellbar ist.

In einer bevorzugten Ausführungsform ist die Waage so ausgebildet, dass der Wechsel in der Anzeigevorrichtung sequentiell durch zwei oder mehrere nacheinander angezeigte Anzeigedarstellungen erfolgt. Zunächst wird beispielsweise das Gewicht oder der Körperfettanteil angezeigt und in einer nächsten Darstellung die Einheit "KG" bzw. "%".

Eine für den Benutzer besonders komfortable Ausgestaltung der Waage sieht vor, dass der Wechsel der Darstellung in der Anzeigevorrichtung zeitlich gesteuert ist. Dabei kann durch die Elektronik der Anzeigevorrichtung eine Zeitdauer für den Wechsel der Anzeigedarstellung in Abhängigkeit der Relevanz eines Teils der Zeichenkette vorgesehen sein.

So ist das gemessene Gewicht relevanter als die zugehörige Einheit "KG", die vielmehr nur kurz kontrolliert werden braucht. Die Darstellungszeit der Zahl, also beispielsweise die Gewichtsangabe, ist dann durch die Elektronik der Anzeigevorrichtung bevorzugt wesentlich länger andauernd gesteuert ausgeführt als die Dauer einer Darstellungszeit der Einheit, beispielsweise im Verhältnis 3:1 oder 5:1. Diese Art des Wechsels ist besonders vorteilhaft für die aus mehreren LEDs gebildete Anzeigevorrichtung.

Eine weitere Möglichkeit die zusammenhängende Zeichenfolge platzsparend darstellen zu können kann dadurch erfolgen, dass der Wechsel in der Anzeigevorrichtung durch eine bewegte Anzeigedarstellung erfolgt. Bevorzugt kann die Anzeigevorrichtung so ausgebildet sein, dass eine erste Darstellung eines ersten Teils der zusammenhängenden Zeichenkette kurz verbleibend gesteuert abgebildet ist und anschließend die bewegte Anzeigedarstellung ausgelöst ist, um dann einen zweiten Teil der Zeichenkette nicht bewegt verbleibend abzubilden.

Alternativ oder in Kombination zum zeitgesteuerten Wechsel der Anzeigedarstellung kann auch vorgesehen sein, dass der Wechsel der Anzeigedarstellung durch Betätigung eines Bedienelements erfolgt.

Weitere Merkmale und Vorteile der Erfindung ergeben sich der nachfolgenden Beschreibung bevorzugter Ausführungsbeispiele anhand der Zeichnungen.

In den Zeichnungen zeigen:
- Fig. 1: eine erfindungsgemäße Waage in dreidimensionaler Ansicht,
- Fig. 2: die Tragplatte einer erfindungsgemäßen Waage im Schnitt,
- Fig. 3: die Tragplatte einer weiteren Ausgestaltung einer erfindungsgemäßen Waage im Schnitt,
- Fig. 4: eine Ausführungsform einer Waage nach dem Stand der Technik,
- Fig. 5: die LED-Verteilung der LEDs der Anzeigevorrichtung aus Figur 4,
- Fig. 6: die LED-Verteilung der aktivierten LEDs der Anzeigevorrichtung aus Figur 5 bei angezeigtem Messwert,
- Fig. 7: eine erfindungsgemäße Ausführungsform der Waage,
- Fig. 8: die LED-Verteilung der LEDs der Anzeigevorrichtung aus Figur 7,

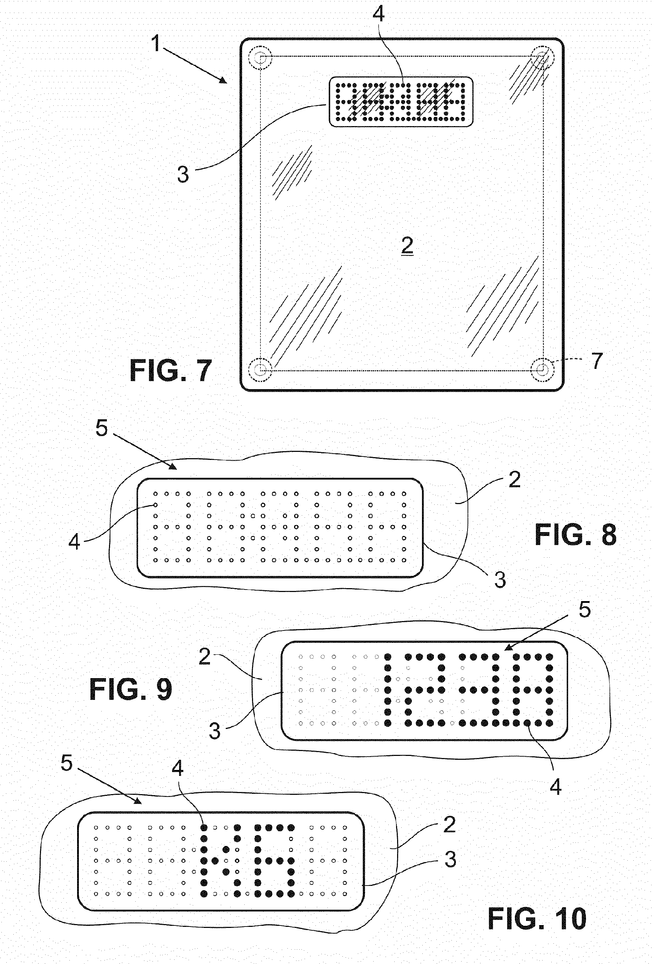

- Fig. 8: die LED-Verteilung der LEDs der Anzeigevorrichtung aus Figur 7,
- Fig. 9: die LED-Verteilung der aktivierten LEDs der Anzeigevorrichtung aus Figur 8 bei angezeigtem Messwert (Zahlenwert) und
- Fig. 10: die LED-Verteilung der aktivierten LEDs der Anzeigevorrichtung aus den Figuren 8 und 9 bei angezeigtem Messwert (Einheit).

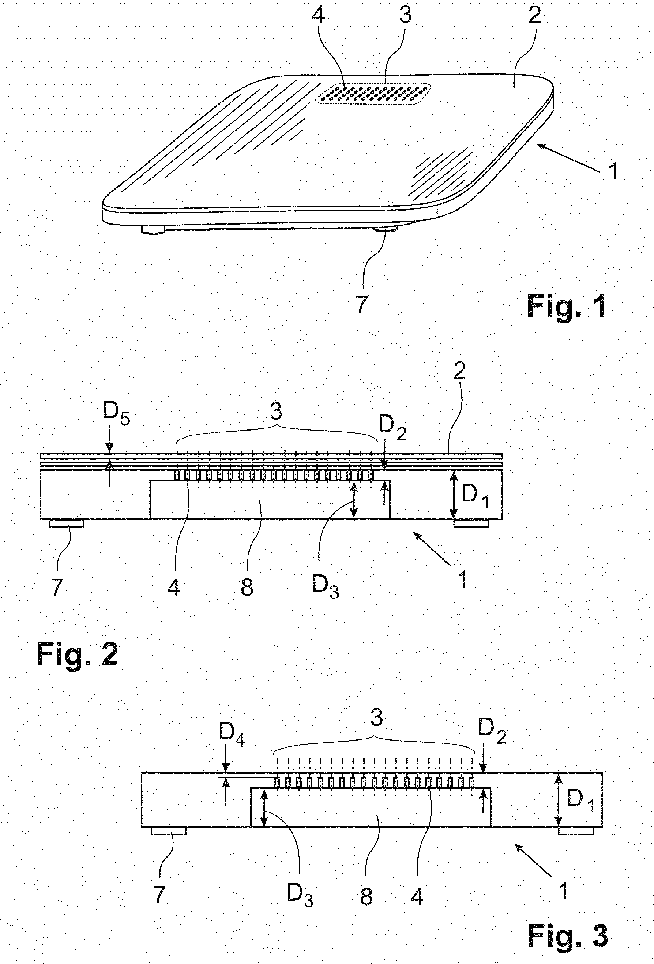

In Figur 1 ist eine erfindungsgemäße Waage 1 mit einer Tragplatte 2 und einer Anzeigevorrichtung 3 abgebildet, wobei sich die Tragplatte 2 über vier Wägezellen 7 (sichtbar sind hier nur zwei vordere Wägezellen 7) auf dem Untergrund abstützt. Die Anzeigevorrichtung 3 ist als Matrixanzeige ausgebildet, die den anzuzeigenden Wert über einzelne Bildpunkte (Pixel) wiedergibt. Die Tragplatte 2 besteht hier aus einem unteren Trägerkörper und einer darauf angeordneten, den unteren Trägerkörper vollständig abdeckenden oberen Deckschicht. Die obere Deckschicht ist dünn ausgebildet und weist beispielsweise eine Dicke von weniger als 3 mm, bevorzugt weniger als 1 mm und besonders bevorzugt von maximal 0,5 mm auf. Sie kann beispielsweise von einem handelsüblichen Holzfurnier oder einer Folie aus lichtdurchlässigem Kunststoff oder einem zur Erzielung der Lichtdurchlässigkeit punktuell ausgestanztem Metall gebildet sein.

Die Matrixanzeige ist im hinteren Bereich der Tragplatte 2 vorgesehen und stellt den gemessenen Gewichtswert, den eine hier nicht sichtbare Elektronik aus dem Messsignal der Wägezellen 7 errechnet hat, über eine Pixel-Darstellung dar. Hierzu sind Lichtpunkte einzelner LEDs 4 unterhalb der Oberseite der Tragplatte 2 vorgesehen, die zum Anzeigen des Gewichtswertes selektiv von der Elektronik angesteuert, das heißt aktiviert werden können.

Die einzelnen LEDs 4 sind in LED-Aufnahmen integriert, die in den Trägerkörper der Tragplatte 2 eingebracht sind. Im gezeigten Ausführungsbeispiel ist für jede LED 4 eine bohrungsähnliche, zylindrische LED-Aufnahme vorgesehen. Alternativ kann die LED 4 natürlich auch unterhalb der Bohrungen vorgesehen sein und in den Bohrungskanal hineinleuchten. Grundsätzlich wird es aber gewünscht sein, wenn zwischen der LED 4 und der oberen Deckschicht ein möglichst geringer Luftraum vorgesehen ist, damit sich aufgrund von Temperaturschwankungen keine die Oberfläche der oberen Deckschicht beeinträchtigenden Druckschwankungen ergeben können. Hierzu kann die LED-Aufnahme nach Einsetzen der LED 4 auch mit einem transluzenten Material verfüllt werden.

Grundsätzlich existieren zumindest zwei Möglichkeiten, die in Figur 1 dargestellte Waage 1 umzusetzen. Diese beiden Möglichkeiten sind in den Figuren 2 und 3 in einer Schnittansicht schematisch dargestellt.

Figur 2 zeigt eine Tragplatte 2 mit einer Deckschicht und einem Trägerkörper in einer Seitenansicht, die im unteren Bereich eine Elektronikaufnahme 8 aufweist. Die Elektronikaufnahme 8 ist hier als quaderförmige oder kubische Ausnehmung im unteren Bereich des Trägerkörpers der Tragplatte 2 ausgebildet. Hier können die nicht dargestellte Elektronik und nicht dargestellte Energieträger in Form von Batterien oder Ackus eingesetzt werden. Oberhalb der Elektronikaufnahme 8 sind die LED-Aufnahmen für LEDs 4 vorgesehen. Diese LED-Aufnahmen sind als nach unten und oben offene Durchgangsbohrungen im Trägerkörper ausgebildet.

Der untere Teil des Trägerkörpers, der die mechanische Last während des Wiegevorgangs im Wesentlichen aufnimmt, weist eine Dicke D₁ auf. Die Tiefe D₃ der Ausnehmung, die die Elektronikaufnahme 8 bildet, ist im Vergleich zur Dicke D₁ etwas geringer, so dass sich oberhalb der LED-Aufnahmen noch ein Materialbereich des unteren Teils des Trägerkörpers mit einer Dicke D₂ ergibt.

In dem oberhalb des Aufnahmebereichs mit den LED-Aufnahmen liegenden Bereich des Trägerkörpers mit der Dicke D₂ sind Durchgangsbohrungen zur Bildung der LED-Aufnahmen vorgesehen, in die LEDs 4 als Leuchtelemente der Matrixanzeige eingebracht sind. Über eine Klebstoffschicht wird der Trägerkörper mit einer Furnierschicht, die als obere Deckschicht dient und eine Dicke D₅ aufweist, beschichtet.

Die in Figur 2 dargestellte Ausführungsform kann sehr günstig hergestellt werden, da die Bohrungen zur Bildung der LED-Aufnahmen als Durchgangsöffnungen ausgeführt sind, die sich im Herstellungsprozess leicht durch Bohren oder Stanzen herstellen lassen. Sofern der Trägerkörper der Tragplatte 2 aus einem geeigneten Material besteht, beispielsweise Kunststoff, können diese Durchgangsöffnungen auch bei der Fertigung des Trägerkörpers bereits vorgesehen werden. Auch eine solche Kunststoffplatte könnte mit geeignetem Klebstoff rundherum furniert werden, so dass sich auch hier der optische Eindruck einer massiven Holzplatte als Tragplatte 2 erzeugen lässt. In der Regel wird der Verbraucher aber Holz oder einen anderen natürlichen Werkstoff bevorzugen.

Da die LED-Aufnahmen vergleichsweise klein sind, reicht eine geringe Dicke D₅ des als obere Deckschicht aufgebrachten Furniers aus. Wegen des geringen Durchmessers muss die obere Deckschicht hier so gut wie keine Kräfte aufnehmen, so dass sich ihre Funktion auf das blickdichte Abdecken der LED-Aufnahmen bei inaktiver Matrixanzeige bzw. bei inaktiven LEDs 4 der Matrixanzeige beschränkt. Dies wiederum macht es leicht möglich, den Gewichtswert durch Aktivieren der LEDs 4 in den LED-Aufnahmen anzuzeigen, da zum Durchscheinen eines dünnen Furniers nur eine geringe Leuchtkraft benötigt wird und das Furnier durch seine lichtstreuende Eigenschaft als "Mattscheibe" dienen kann. Die Anzahl der LED-Aufnahmen und der LEDs 4 hängt von der gewünschten Auflösung des so erzeugten Anzeigebereichs der Matrixanzeige und natürlich von der Anzahl der Informationen ab, die über die Matrixanzeige dargestellt werden sollen.

Figur 3 zeigt die andere grundlegende Ausgestaltung der Erfindung, bei der die Tragplatte 2 aus einem massiven Block besteht, in dessen Unterseite eine Elektronikaufnahme 8 vorgesehen ist. In die obere Decke des Trägerkörpers oberhalb dieser Elektronikaufnahme 8 sind Sacklöcher als LED-Aufnahmen eingebracht, in denen die LEDs 4 der Matrixanzeige (hier als solche nicht sichtbar) eingesetzt werden. Insoweit unterscheidet sich die Funktion dieser Ausgestaltung nicht von der Ausgestaltung nach Figur 2.

Im Gegensatz zur Ausgestaltung nach Figur 2 ist hier allerdings ein separates Furnier als obere Deckschicht zwar möglich, aber nicht notwendigerweise vorzusehen. Die Sacklöcher der Matrixanzeige sind keine Durchgangsbohrungen, sondern lassen einen oberen Teil der Tragplatte 2 mit einer Dicke D₄ unberührt, der hier die obere Schicht anstelle einer separaten oberen Deckschicht bildet. Die Dicke D₂ oberhalb der Elektronikaufnahme 8 ist so gewählt, dass auch der durch die Sacklöcher geschwächte Bereich die auftretenden Lasten ohne Beschädigung aufnehmen kann. Die Dicke D₄ wiederum ist wie die Dicke D₅ des in Figur 2 dargestellten Furniers so gering, dass die in den Sacklöchern angeordneten LEDs 4 diesen Bereich der Tragplatte 2 durchleuchten können, der Bereich oberhalb der Sacklöcher also transluzent ist.

Auch die in Figur 3 dargestellte Ausführungsform kann mit einem zusätzlichen Furnier oder mit einer sonstigen Beschichtung versehen sein. Die glatte Oberfläche der Tragplatte 2 erlaubt darüber hinaus das Bedrucken der Tragplatte 2 mit attraktiven Motiven. Ferner ist die spaltfreie Ausgestaltung bei Badezimmer- oder Küchenwaagen vorteilhaft, da sich hierdurch die Anreicherung von Bakterien vermeiden lässt. Schließlich ließe sich eine Küchenwaage, insbesondere wenn sie aus Holz gefertigt ist, auch als Schneidebrett oder isolierender Untersetzer verwenden. Um diese Funktionen zu optimieren, können an der Oberseite der Tragplatte 2 Befestigungsmittel für austauschbare Unterlagen vorgesehen werden, zum Beispiel für folienartige, fixierbare Schneidunterlagen.

Beide Ausgestaltungen, sowohl die in Figur 2 dargestellte Ausführungsform als auch die in Figur 3 dargestellte Ausgestaltung, weisen eine Elektronikaufnahme 8 auf, die groß genug ist, um die vollständige Elektronik der Waage 1 aufzunehmen. Die hier nicht dargestellten Wägezellen 7 erstrecken sich dann in Form von drei oder vier Standfüßen von der Tragplatte 2 nach unten. Auch die Energieversorgung der Waage 1 kann in die Tragplatte 2 bzw. die Elektronikaufnahme 8 in Form von Batterien oder Akkus integriert werden.

Sofern die Matrixanzeige aufgrund der notwendigerweise eingeschränkten Auflösung nicht alle Informationen anzeigen kann, die dem Benutzer angezeigt werden sollen, kann ferner vorgesehen werden, dass die Waage 1 über eine drahtlose Verbindung mit einer weiteren Anzeige, beispielsweise der eines Smartphones, korrespondieren kann. So kann beispielsweise im Fall einer Personenwaage die Matrixanzeige nur das Gewicht anzeigen, während Körperanalysefunktionen über das externe Display des Smartphones angezeigt werden.

Die in den Figuren 2 und 3 dargestellten Beispiele sollen allerdings den Schutzbereich der Erfindung nicht einschränken. Die LED-Aufnahmen können auch von einer Vielzahl von kleineren Einsenkungen oder Bohrungen gebildet sein, die in die Oberseite des Trägerkörpers eingebracht sind und in denen dann die LEDs 4 vorgesehen sind. Diese können, wie im Zusammenhang mit den Figuren 2 und 3 beschrieben, über eine untere Elektronikaufnahme 8 kontaktiert werden, alternativ kann die Kontaktierung auch über eingeprägte, nutförmige Kabelkanäle in der Oberseite des Trägerkörpers oder über aufgedruckte Leiterbahnen erfolgen, die beispielsweise unterhalb der oberen Deckschicht vorgesehen sind.

Schließlich können auch zusätzliche LEDs 4 vorgesehen werden, die zum Beispiel in Ecken der Tragplatte 2 oder an deren Rändern angeordnet werden können, so dass diese Bereiche optisch kenntlich gemacht werden können. Dies bietet sich insbesondere bei Badezimmerwaagen an. Auch können sogenannte Sensor-Touch-Bereiche, als Teile der Tragplatte 2, die mit einem Näherungssensor versehen sind, über die LEDs 4 sichtbar gemacht werden. Schließlich können diese zusätzlichen LEDs 4 an den Rändern oder in den Sensor-Touch-Bereichen auch ihrerseits über Näherungssensoren aktiviert werden, so dass bei einem Annähern des Benutzers eine automatische Illumination erfolgt.

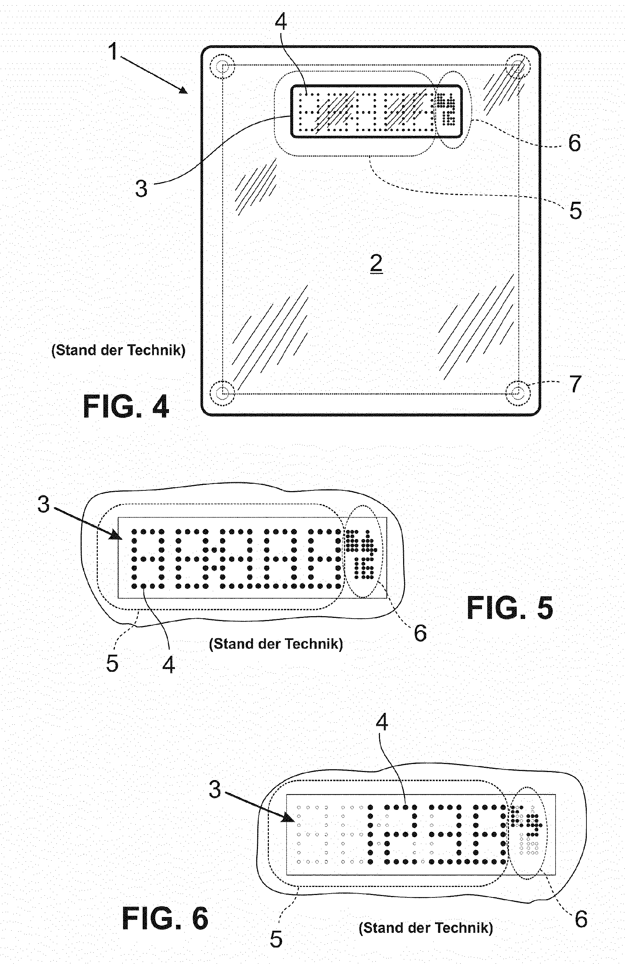

Bei allen Ausgestaltungen ist aber trotz der Vorteile der LEDs 4 nachteilig, dass für die für den Benutzer eigentlich nur temporär interessante Anzeige der gemessenen Einheit vergleichsweise viel Platz der Anzeigevorrichtung 3 verbraucht wird. Die in Figur 4 gezeigte Ausgestaltung einer Waage 1 nach dem Stand der Technik mit den in den Figuren 5 und 6 gezeigten Details der Anzeigevorrichtung 3 verdeutlicht dies. Die hier dargestellte Waage 1 ist zu den oben beschriebenen Varianten im Grundaufbau identisch.

Die Anzeigevorrichtung 3 ist auch hier im hinteren Bereich der Tragplatte 2 vorgesehen und dafür eingerichtet, den gemessenen Gewichtswert, den eine hier nicht sichtbare Elektronik aus dem Messsignal der Wägezellen 7 errechnet hat, über eine Pixel-Darstellung darzustellen. Hierzu sind einzelne Leuchtpunkte unterhalb der Oberseite der Tragplatte 2 vorgesehen, die zum Anzeigen des Gewichtswert selektiv von der Elektronik angesteuert werden. Die Anzeigevorrichtung 3 weist zwei Anzeigebereiche 5, 6 auf, wobei ein erster Anzeigebereich 5 eingerichtet ist, einen Messwert in Zahlen darzustellen und ein zweiter Bereich 6 eingerichtet ist, Buchstaben und Sonderzeichen zur Darstellung der dem Messwert zuzuordnenden Einheit abbilden zu können.

Da die Einheitsinformation in der Regel nur der kurzen Kontrolle dienen, ist der erste Anzeigebereich 5 wesentlich größer dimensioniert als der zweite Anzeigebereich 6.

In den Figuren 5 und 6 ist die Anzeigevorrichtung 3 aus Figur 4 inaktiv (Figur 5) und in einem beispielhaften, aktiven (Figur 6) Betriebszustand dargestellt, bei der als Messwert das Gewicht und die zugehörige Einheit "kg" über eine Ansteuerung der einzelnen Leuchtpunkte (LEDs 4) des ersten Anzeigebereichs 5 und des zweiten Anzeigebereichs 6 dargestellt ist.

Eine Ausführungsform der verbesserten erfindungsgemäßen Waage 1 mit einer Anzeigevorrichtung 3 mit wechselnder Darstellung ist in Figur 7 abgebildet. Die Anzeigevorrichtung 3 ist durch einzelne als LEDs 4 ausgebildete Leuchtpunkte gestaltet. Die LEDs 4 sind einzeln oder in Gruppen ansteuerbar und so angeordnet, dass sowohl Zahlen, als auch einzelne Buchstaben abbildbar sind. Exemplarisch sind zur Verdeutlichung zusätzliche LEDs 4 innerhalb der LEDs 4 für die Zahlendarstellung vorgesehen, vorliegend für die Darstellung der Diagonalstrich des Buchstabens "K". Die Anzeigevorrichtung 3 weist nun nur noch den ersten Anzeigebereich 5 auf und baut auf diese Weise kompakter als die in den Figuren 4, 5 und 6 gezeigte Anzeigevorrichtung 3, da die beiden Anzeigeinhalte des ersten Anzeigebereichs 5 und des zweiten Anzeigebereich 6 nun nacheinander oder z.B. in ständigem Wechsel angezeigt werden können, also auf einen Anzeigebereich 5 oder 6 verzichtet werden kann.

Die Figuren 8, 9 und 10 zeigen drei verschiedene Schaltdarstellungen der Anzeigevorrichtung 3 aus Figur 7, wobei die unteren beiden Schaltdarstellungen beispielhaft das gemessene Gewicht darstellen. Zunächst wird in einer ersten Darstellung der gemessene Wert dargestellt. Anschließend wird die Darstellung durch Steuerung der LEDs 4 gewechselt und die LEDs 4 werden in demselben Anzeigebereich 6 oder 5 illuminiert, um die Einheit "KG" anzuzeigen.

Der Wechsel zwischen dem Messergebnis und der Einheit erfolgt bevorzugt zeitgesteuert durch die Elektronik der Anzeigevorrichtung 3. Da die Anzeige der Einheit meist nur der kurzen Kontrolle dient, ist die Zeitdauer der Anzeige des Messwertes bevorzugt um ein Vielfaches länger als die Zeitdauer, über die die Einheit angezeigt wird. Weiter bevorzugt lässt sich die Zeitdauer durch ein Bedienelement an der Waage 1 verstellen und optional auch ausstellen. Auch kann vorgesehen sein, dass die Anzeigevorrichtung 3 so eingerichtet ist, dass durch ein Betätigen eines Bedienelementes der Wechsel zwischen den Darstellungen erfolgt.

### Bezugszeichenliste:

- 1: Waage
- 2: Tragplatte
- 3: Anzeigevorrichtung
- 4: LEDs
- 5: Erster Anzeigebereich
- 6: Zweiter Anzeigebereich
- 7: Wägezelle
- 8: Elektronikaufnahme
- D₁: Dicke des Trägerkörpers
- D₂: Dicke des Bereichs des oberhalb der Elektronikaufnahme
- D₃: Tiefe der Elektronikaufnahme
- D₄: Dicke der Deckschicht
- D₅: Dicke der als Deckschicht aufgebrachten Abdecklage

## Patentansprüche

1. Waage (1) mit
• einer Tragplatte (2) zur Aufnahme einer zu wiegenden Last,
• einer Auswerteelektronik zur Bestimmung des Gewichts der Last,
• einer unter der Tragplatte (2) angeordneten Anzeigevorrichtung (3) zur Anzeige einer Zeichenfolge, die den Zahlenwert des gemessenen Gewichtes der Last und die Einheit des Messwertes umfasst, und
• mit zumindest einem Bedienelement zur Bedienung der Waage (1), wobei
• die Anzeigevorrichtung (3) eine Mehrzahl von durch LEDs (4) gebildete Leuchtquellen umfasst, die von einer Elektronik zur Anzeige des Wiegeergebnisses selektiv ansteuerbar ausgebildet sind,
• die Tragplatte (2) wenigstens in dem Bereich, unter dem die Anzeigevorrichtung (3) angeordnet ist, eine geschlossene Deckschicht aufweist und wobei
• die Anzeigevorrichtung (3) eine Leuchtstärke und die Deckschicht eine Transluzenz aufweisen, die derart auseinander abgestimmt sind, dass die Anzeigevorrichtung (3) durch die Deckschicht sichtbar ist und das Wiegeergebnis erkennbar ist,
**dadurch gekennzeichnet, dass**
die durch die Elektronik der Waage (1) gesteuerte Anzeigevorrichtung (3) derart ausgebildet und eingerichtet ist, dass sie die Zeichenfolge durch einen Wechsel der Anzeigedarstellung in der Anzeigevorrichtung (3) sequentiell in einer Weise hintereinander abzubilden und anzuzeigen vermag, dass sie zunächst das Wiegeergebnis als Zahlenwert und anschließend die zugehörige Einheit darstellt oder zunächst die Einheit und anschließend das zugehörige Wiegeergebnis als Zahlenwert darstellt, so dass das Wiegeergebnis und die zugehörige Einheit nicht gleichzeitig in der Anzeigevorrichtung (3) dargestellt werden, wobei die Anzeigevorrichtung (3) über die einzelnen LEDs (4) Zahlen und Buchstaben zusammensetzt.

2. Waage (1) nach einem der vorstehenden Ansprüche, **dadurch gekennzeichnet, dass** die Anzeigevorrichtung (3) eingerichtet ist, einen ersten Teil der Zeichenfolge in einer anderen Farbe darstellen zu können als einen zweiten Teil der Zeichenfolge, insbesondere dass die Zahlendarstellung in einer ersten Farbe und eine der Zahlendarstellung zugeordneten Einheit in einer anderen Farbe darstellbar ist oder dargestellt ist.

3. Waage (1) nach einem der vorstehenden Ansprüche, **dadurch gekennzeichnet, dass** der Wechsel der Anzeigedarstellung in der Anzeigevorrichtung (3) zeitlich gesteuert ist, wobei die aus einer Zahl und einer der Zahl zuzuordnenden Einheit gebildete Zeichenfolge derart angezeigt ist, dass eine Darstellungszeit der Zahl länger ist als eine Darstellungszeit der Einheit.

4. Waage (1) nach dem vorhergehenden Anspruch, **dadurch gekennzeichnet, dass** die Darstellungszeit der Zahl dreimal länger ist als die Darstellungszeit der Einheit.

5. Waage (1) nach Anspruch 3, **dadurch gekennzeichnet, dass** die Darstellungszeit der Zahl fünfmal länger ist als die Darstellungszeit der Einheit.

6. Waage (1) nach einem der vorstehenden Ansprüche, **dadurch gekennzeichnet, dass** der Wechsel der Anzeigedarstellung in der Anzeigevorrichtung (3) durch eine bewegte Anzeigedarstellung realisiert ist.

7. Waage (1) nach einem der vorhergehenden Ansprüche, **dadurch gekennzeichnet, dass** die Tragplatte (2) mehrschichtig mit einem Trägerkörper zur Aufnahme der zu wiegenden Last und der Deckschicht aufgebaut ist, die die Oberseite des Trägerkörpers (1") teilweise oder vollflächig bedeckt, wobei eine obere Schicht von der Deckschicht und eine darunter angeordnete Schicht von dem ein- oder mehrschichtig ausgebildeten Trägerkörper gebildet ist und der Trägerkörper LED-Aufnahmen in Form von Einsenkungen, Hohlräumen und/oder Durchgangsöffnungen aufweist, in denen die LEDs (4) angeordnet sind.

8. Waage (1) nach dem vorhergehenden Anspruch, **dadurch gekennzeichnet, dass** die Deckschicht derart ausgebildet ist, dass die LEDs (4) im inaktiven, nicht lichtabgebenden Zustand durch die Deckschicht nicht erkennbar sind.

9. Waage (1) nach einem der beiden vorhergehenden Ansprüche, **dadurch gekennzeichnet, dass** der Trägerkörper und die Deckschicht aus Holz, insbesondere aus Bambus oder aus einem anderen Holz, bestehen, wobei die Deckschicht auf die Oberseite des Trägerkörpers furniert ist und aus dem gleichen Holz besteht, wie der Trägerkörper und wobei die Tragplatte (2) derart ausgebildet ist, dass bei inaktiven LEDs (4) ausschließlich eine Holzplatte mit dem Eindruck einer massiven Holzplatte sichtbar ist.

10. Waage (1) nach einem der vorhergehenden Ansprüche, **dadurch gekennzeichnet, dass** zwischen der oberen Deckschicht (1') und den LEDs (4) Linsen zum Fokussieren des von den LEDs (4) emittierten Lichtes angeordnet sind, wobei die Linsen von einer transparenten Kunststofffolie gebildet sind, die zwischen der oberen Deckschicht und dem Trägerkörper vorgesehen ist und in die die Linsen eingeprägt sind.

## Claims

1. Scale (1) comprising
• a support plate (2) for carrying a load to be weighed,
• evaluation electronics for determining the weight of the load
• a display device (3) arranged under the support plate (2) for displaying a character string which comprises the numerical value of the measured weight of the load and the unit of the measured value, and
• with at least one operating element for operating the scale (1), wherein
• the display device (3) comprises a plurality of light sources embodied by LEDs (4) which are selectively controllable by an electronic system for displaying the weighing result,
• the support plate (2) comprises a continuous cover layer at least in the region under which the display device (3) is arranged, and wherein
• the display device (3) comprises a luminosity and the cover layer a translucency which are matched to one another in such a way that the display device (3) is visible through the cover layer and the weighing result is recognizable,
**characterized in that**
the display device (3) controlled by the electronic system of the scale (1) is embodied and set up in such a way that it is capable of sequentially depicting and displaying the character sequence by changing the display picture in the display device (3) in such a way that it first displays the weighing result as a numerical value and then the associated unit or first displays the unit and then the associated weighing result as a numerical value, so that the weighing result and the associated unit are not displayed simultaneously in the display device (3), the display device (3) combining numbers and letters via the individual LEDs (4).

2. Scale (1) according to one of the preceding claims, **characterized in that** the display device (3) is set up to be able to display a first part of the character sequence in a different color than a second part of the character sequence, in particular **in that** the number representation can be or is displayed in a first color and a unit assigned to the number representation is displayed in a different color.

3. Scale (1) according to one of the preceding claims, **characterized in that** the change of the display representation in the display device (3) is time-controlled, wherein the character string formed from a number and a unit to be assigned to the number being displayed in such a way that a display time of the number is longer than a display time of the unit.

4. Scale (1) according to the preceding claim, **characterized in that** the display time of the number is three times longer than the display time of the unit.

5. Scale (1) according to claim 3, **characterized in that** the display time of the number is five times longer than the display time of the unit.

6. Scale (1) according to one of the preceding claims, **characterized in that** the change of the display representation in the display device (3) is realized by a moving display representation.

7. Scale (1) according to one of the preceding claims, **characterized in that** the support plate (2) is made up of several layers with a carrier body for receiving the load to be weighed and the cover layer, which partially or completely covers the upper side of the carrier body (1"), wherein an upper layer is constituted by the cover layer and a layer arranged underneath is constituted by the carrier body embodied in one or more layers and the carrier body comprises LED receptacles in the form of recesses, cavities and/or through-holes, in which the LEDs (4) are arranged.

8. Scale (1) according to the preceding claim, **characterized in that** the cover layer is embodied in such a way that the LEDs (4) are not visible through the cover layer in the inactive, non-light-emitting state.

9. Scale (1) according to one of the two preceding claims, **characterized in that** the support body and the cover layer consist of wood, in particular of bamboo or of another wood, the cover layer being veneered on the upper side of the support body and consisting of the same wood as the support body, and the support plate (2) being embodied in such a way that, when the LEDs (4) are inactive, only a wooden plate with the impression of a solid wooden plate is visible.

10. Scale (1) according to one of the preceding claims, **characterized in that** lenses for focusing the light emitted by the LEDs (4) are arranged between the upper cover layer (1') and the LEDs (4), the lenses being constituted by a transparent plastic film which is provided between the upper cover layer and the carrier body and in which the lenses are embossed.

## Revendications

1. Balance (1) qui comprend
• une plaque de support (2) pour le récepteur d'une charge à peser,
• un système électronique d'évaluation pour déterminer le poids de la charge,
• un dispositif d'affichage (3) disposé sous la plaque de support (2) pour l'affichage d'une suite de caractères qui comprend la valeur numérique du poids mesuré de la charge et l'unité de la valeur mesurée, et
• comprenant au moins un élément de commande pour la commande de la balance (1), dans lequel
• le dispositif d'affichage (3) comprend une pluralité de sources lumineuses formées par des DEL (4), qui sont réalisées de manière à pouvoir être commandées sélectivement par une électronique pour l'affichage du résultat de pesée,
• la plaque de support (2) comprend, au moins dans la zone sous laquelle est disposé le dispositif d'affichage (3), une couche de recouvrement fermée, et dans lequel
• le dispositif d'affichage (3) comprend une intensité lumineuse et la couche de recouvrement une translucidité qui sont adaptées l'une à l'autre de telle sorte que le dispositif d'affichage (3) est visible à travers la couche de recouvrement et que le résultat de la pesée est reconnaissable,
**caractérisée en ce que**
le dispositif d'affichage (3) commandé par l'électronique de la balance (1) est conçu et aménagé de telle sorte qu'il peut représenter et afficher la suite de caractères séquentiellement les uns derrière les autres d'une manière par un changement de la représentation d'affichage dans le dispositif d'affichage (3), qu'il représente d'abord le résultat de la pesée comme valeur numérique et ensuite l'unité correspondante ou qu'il représente d'abord l'unité et ensuite le résultat de la pesée correspondant comme valeur numérique, de sorte que le résultat de la pesée et l'unité correspondante ne sont pas représentés simultanément dans le dispositif d'affichage (3), le dispositif d'affichage (3) composant des chiffres et des lettres par l'intermédiaire des différentes DEL (4).

2. Balance (1) selon l'une des revendications précédentes, **caractérisée en ce que** le dispositif d'affichage (3) est conçu pour pouvoir représenter une première partie de la séquence de caractères dans une autre couleur qu'une deuxième partie de la séquence de caractères, en particulier **en ce que** la représentation numérique peut être représentée ou est représentée dans une première couleur et une unité associée à la représentation numérique dans une autre couleur.

3. Balance (1) selon l'une des revendications précédentes, **caractérisée en ce que** le changement de représentation d'affichage dans le dispositif d'affichage (3) est commandé dans le temps, la suite de caractères formée d'un nombre et d'une unité à associer au nombre étant affichée de telle sorte qu'un temps de représentation du nombre soit plus long qu'un temps de représentation de l'unité.

4. Balance (1) selon la revendication précédente, **caractérisée en ce que** le temps d'affichage du nombre est trois fois plus long que le temps d'affichage de l'unité.

5. Balance (1) selon la revendication 3, **caractérisée en ce que** le temps de représentation du nombre est cinq fois plus long que le temps de représentation de l'unité.

6. Balance (1) selon l'une des revendications précédentes, **caractérisée en ce que** le changement de la représentation d'affichage dans le dispositif d'affichage (3) est réalisé par une représentation d'affichage en mouvement.

7. Balance (1) selon l'une des revendications précédentes, **caractérisée en ce que** la plaque de support (2) est constituée de plusieurs couches avec un élément porteur pour le récepteur de la charge à peser et la couche de recouvrement qui recouvre partiellement ou entièrement la face supérieure de l'élément porteur (1"), une couche supérieure étant formée par la couche de recouvrement et une couche disposée en dessous étant formée par l'élément porteur constitué d'une ou de plusieurs couches et l'élément porteur comprenant des récepteurs de DEL sous la forme d'enfoncements, de cavités et/ou d'ouvertures de passage dans lesquels sont disposées les DEL (4).

8. Balance (1) selon la revendication précédente, **caractérisée en ce que** la couche de recouvrement est conçue de telle sorte que les DEL (4) ne sont pas visibles à travers la couche de recouvrement lorsqu'elles sont inactives et n'émettent pas de lumière.

9. Balance (1) selon l'une des deux revendications précédentes, **caractérisée en ce que** l'élément porteur et la couche de recouvrement sont en bois, en particulier en bambou ou en un autre bois, la couche de recouvrement étant plaquée sur la face supérieure de l'élément porteur et étant constituée du même bois que l'élément porteur, et la plaque de support (2) étant conçue de telle sorte que, lorsque les DEL (4) sont inactives, seule une plaque de bois donnant l'impression d'une plaque de bois massive est visible.

10. Balance (1) selon l'une des revendications précédentes, **caractérisée en ce que** des lentilles sont disposées entre la couche de recouvrement supérieure (1') et les LED (4) pour focaliser la lumière émise par les LED (4), les lentilles étant formées par un film plastique transparent qui est prévu entre la couche de couverture supérieure et l'élément porteur et dans lequel les lentilles sont imprimées.
